# DEMANDE DE BREVET EUROPEEN

(11) **EP 1 000 850 A1**
(43) Date de publication de la demande: **17.05.2000**
(21) Numéro de dépôt: 99410145.9
(22) Date de dépôt: 25.10.1999
(51) Int. Cl.: B62M 27/02, B62K 25/08

(54) **Véhicule motorisé de neige équipé d'un ensemble avant de direction et de suspension**

(30) Priorité: 26.10.1998 CA 2253192
(71) Demandeur: Bibollet, Jean-Claude, F-74230 Thônes (FR)
(72) Inventeur: Bibollet, Jean-Claude, F-74230 Thônes (FR)
(74) Mandataire: Hecké, Gérard

(57) **Abrégé**

Un véhicule de neige ( 2 ) comprend un ensemble arrière porteur ( 3 ) équipé au moins d'une chenille de propulsion ( 7 ), et un ensemble avant de direction et de suspension ( 1) comportant un élément supérieur (51) et un élément inférieur (52) solidarisés en rotation, et montés téléscopiquement à coulissement l'un par rapport à l'autre à l'encontre d'un dispositif élastique de rappel. L'élément supérieur (51) et l'élément inférieur (52) sont reliés à l'ensemble arrière porteur (3) respectivement par une liaison à pivot (9), et un bras de retenue (8). L'une des extrémités du bras de retenue (8) est articulée à l'ensemble arrière porteur (3) autour d'un axe (11) horizontal s'étendant perpendiculairement au plan (P) de symétrie du véhicule. L'autre extrémité du bras de retenue (8) est rattachée à l'élément inférieur (52) par une liaison mécanique (10) à deux degrés de liberté autorisant un mouvement de double rotation autour de deux axes orthogonaux.

## Description

### Domaine technique de l'invention

La présente invention concerne un véhicule de neige comprenant :
- un ensemble arrière porteur équipé au moins d'une chenille de propulsion ,
- un ensemble avant de direction et de suspension muni au moins d'un ski , et d'une colonne de direction coopérant avec des moyens d'entraînement en rotation pilotés par un guidon de manoeuvre.

### Etat de la technique

Les suspensions équipant les véhicules de neige de l'art antérieur sont généralement formés par des combinés ressorts - amortisseurs dont l'agencement complexe entraîne un coût de revient élevé. La configuration de ces suspensions se traduit par une position élevée du centre de gravité qui pénalise la stabilité générale du véhicule, particulièrement dans les virages. Par ailleurs, l'accès difficile aux combinés ressorts - amortisseurs placés sous le moteur, rallonge les opérations de réglage et de maintenance , et à fortiori les opérations de remplacement de pièces . Enfin la plupart n' offrent que des débattements de suspensions limités et d'une progressivité insuffisante, au détriment de l'absorption des obstacles et des chocs qui ne s'effectue pas avec suffisamment de confort et de sécurité. Certains dispositifs utilisent des bras transversaux présentant une résistance importante à l'avancement en neige profonde, et qui en outre sont sensibles aux chocs frontaux.

### Objet de l'invention

L'objet de la présente invention consiste à réaliser une motoneige ayant une suspension progressive et confortable, et bénéficiant d'un accès direct permettant d'effectuer rapidement les opérations de réglage et de maintenance.

Le véhicule de neige motorisé selon l'invention est caractérisé en ce que :
- l'ensemble avant de direction et de suspension comporte au moins un élément supérieur et un élément inférieur solidarisés en rotation, et montés téléscopiquement à coulissement l'un par rapport à l'autre à l'encontre d'un dispositif élastique de rappel,
- l'élément supérieur et l'élément inférieur sont reliés à l'ensemble arrière porteur respectivement par une liaison à pivot, et un bras de retenue,
- l'une des extrémités du bras de retenue est articulée à l'ensemble arrière porteur autour d'un axe horizontal s'étendant perpendiculairement au plan de symétrie du véhicule,
- et l'autre extrémité du bras de retenue est rattachée à l'élément inférieur par une liaison mécanique à deux degrés de liberté autorisant un mouvement combiné de rotation autour de deux axes orthogonaux.

Selon une caractéristique de l'invention, l'élément inférieur et l'élément supérieur constituant la colonne de direction sont disposés dans l'alignement l'un de l'autre et de façon coaxiale , et sont solidarisés en rotation l'un par rapport à l'autre par un arbre ou un tube de section mâle cannelée , polygonale ou de toute autre forme de section , solidarisé à l'un des deux éléments collaborant avec une pièce femelle de section complémentaire solidarisée à l'autre élément. L'un des deux éléments peut ainsi coulisser à l'intérieur de l'autre élément sur une longueur suffisante, pour que d'une part la rotation du guidon entraîne la rotation correspondante du ski avec le minimum de jeu angulaire, et que d'autre part l'alignement axial des deux éléments l'un par rapport à l'autre soit le plus précis et le plus rigide possible.

Selon un mode de réalisation préférentiel, le système élastique de rappel est constitué par un combiné ressort - amortisseur dont l'extrémité supérieure est reliée soit au bras de retenue, soit à l'ensemble arrière porteur, et ce directement ou par l'intermédiaire d'un bras ou biellette secondaire ou de tout autre dispositif équivalent. L'extrémité inférieure dudit combiné ressort-amortisseur est reliée à la base de la colonne de direction ou directement au ski au voisinage de l'axe reliant le ski à la colonne de direction. Le combiné ressort - amortisseur exerce ainsi sur la partie basse de l'élément inférieur une poussée oblique ayant une composante horizontale dirigée vers l'avant qui s'oppose avantageusement aux contraintes de flexion transmises à la colonne de direction par les chocs frontaux. La position très basse du combiné ressort - amortisseur contribue à rabaisser le centre de gravité du véhicule, en améliorant ainsi la stabilité et l'accessibilité pour la maintenance. Le combiné ressort - amortisseur est en outre protégé de la neige et des chocs par la colonne de direction qui est située juste devant lui. La majeure partie des chocs frontaux est transmise par le bras de retenue directement au châssis.

Selon une autre caractéristique de l'invention , lorsque la suspension n'est pas sollicitée en position de repos, le premier axe autour duquel pivote le bras de retenue par rapport à l'ensemble arrière porteur est plus éloigné du sol que la liaison mécanique reliant l'extrémité avant dudit bras de retenue à l'élément inférieur. Le bras de retenue s'étend alors obliquement dans le sens longitudinal du véhicule. Dans la position active de la suspension, l'extrémité avant du bras de retenue repousse vers l'avant l'élément inférieur entraînant une variation de l'angle de chasse qui contribue à augmenter la stabilité longitudinale du véhicule.

Selon une autre caractéristique de l'invention applicable à des véhicules de neige à deux skis commandés par une tringlerie de direction associées à des biellettes de direction , ces dernières sont avantageusement solidarisées à chacune des deux colonnes de direction au voisinage de la liaison reliant l'élément supérieur à l'ensemble arrière porteur. Les débattements de suspension, même de grande amplitude, n'ont pas d'incidence importante sur les biellettes de direction puisque celles - ci ne sont pas solidarisées à l'élément inférieur. Les deux colonnes de direction, disposées symétriquement par rapport au plan de symétrie du véhicule, sont disposées obliquement selon un angle de carrossage qui peut être positif ou négatif.

Selon une autre caractéristique, les moyens de rappel peuvent être constitués d'un ou de plusieurs combinés ressort - amortisseur hydraulique, mais il peuvent aussi être constitués d'un dispositif pneumatique ou à gaz, ou encore utiliser les propriétés de déformation élastique de certains matériaux composites , de certains métaux ou de certaines matières telles notamment que le caoutchouc .

Selon une autre caractéristique, les moyens de rappel sont avantageusement calculés et implantés pour que la suspension soit progressive, l'enfoncement étant plus important en début de débattement pour les gros chocs. La suspension doit également absorber les petits chocs sans les transmettre à l'ensemble arrière porteur.

### Description sommaire des dessins

D'autres avantages et caractéristiques ressortiront plus clairement de la description qui va suivre de différents modes de réalisation de l'invention , donnés à titres d'exemples non limitatifs et représentés aux dessins annexés dans lesquels :
- les figures 1 à 8 représentent schématiquement différentes variantes de réalisation d'un ensemble avant de direction et de suspension selon l'invention, montrant plusieurs implantations envisageables pour les moyens de rappel constitués pour les figures 1 à 6 d'un combiné ressort amortisseur, tandis que ces moyens de rappel sont constitués d'un élément palier élastique pour la figure 7, et d'une lame flexible en matériau composite pour la figure 8.
- la figure 9 représente un véhicule de neige équipé du dispositif de direction et de suspension avant selon l'invention, et possédant un seul ski avant et une seule chenille de propulsion.
- les figures 10 , 11 montrent deux variantes de réalisation du bras de retenue du dispositif de direction et de suspension avant du véhicule représenté à la figure 9 .
- les figures 12 , 13 , 14 et 15 représentent quatre variantes d'un mode de réalisation préférentiel de l'invention, appliqué à un véhicule de neige comportant un seul ski avant .
- les figures 16 , 17 et 18 représentent trois variantes d'un mode de réalisation de l'invention appliqué à un véhicule de neige comportant deux skis avant.

### Description détaillée de différents modes de réalisation

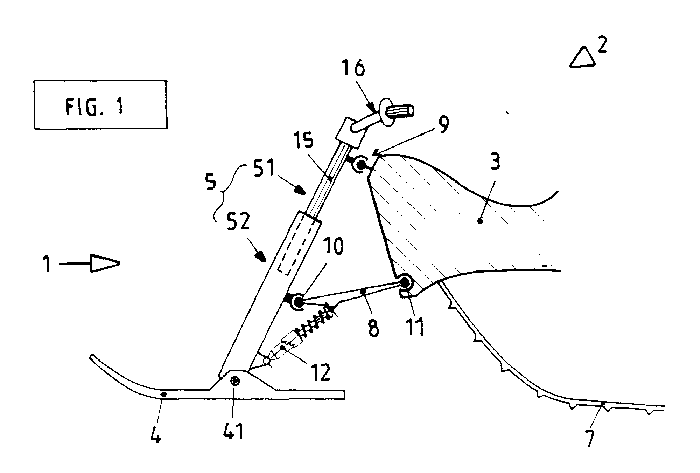

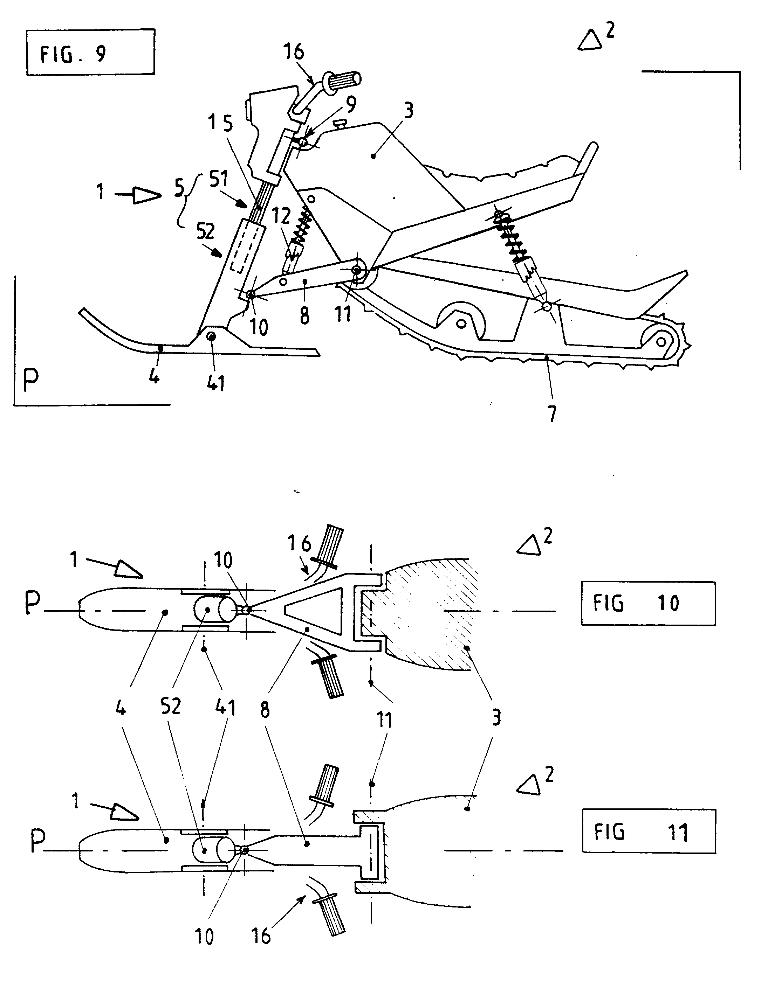

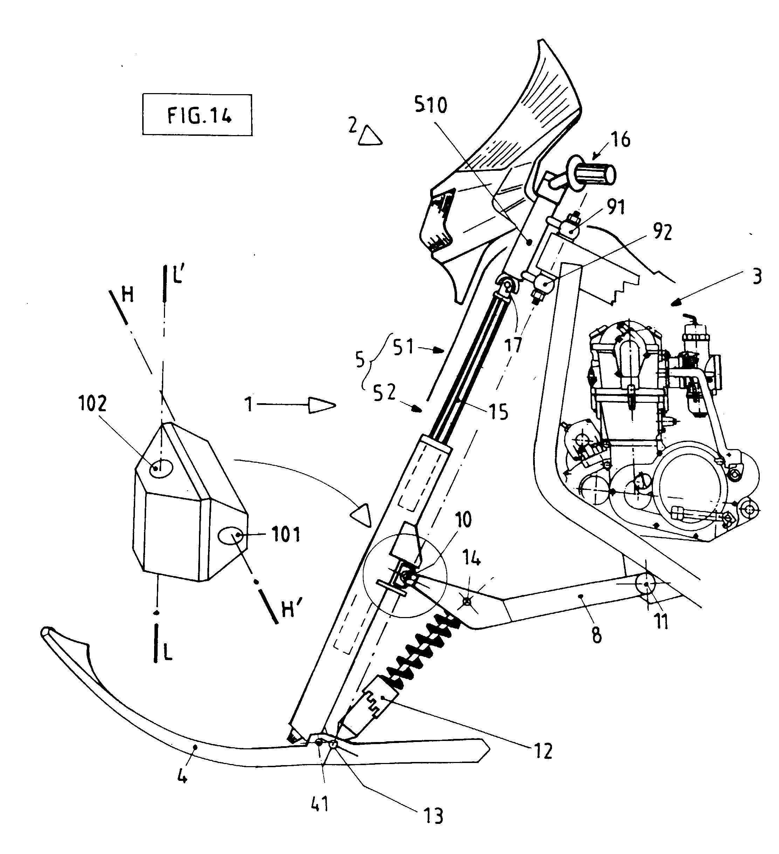

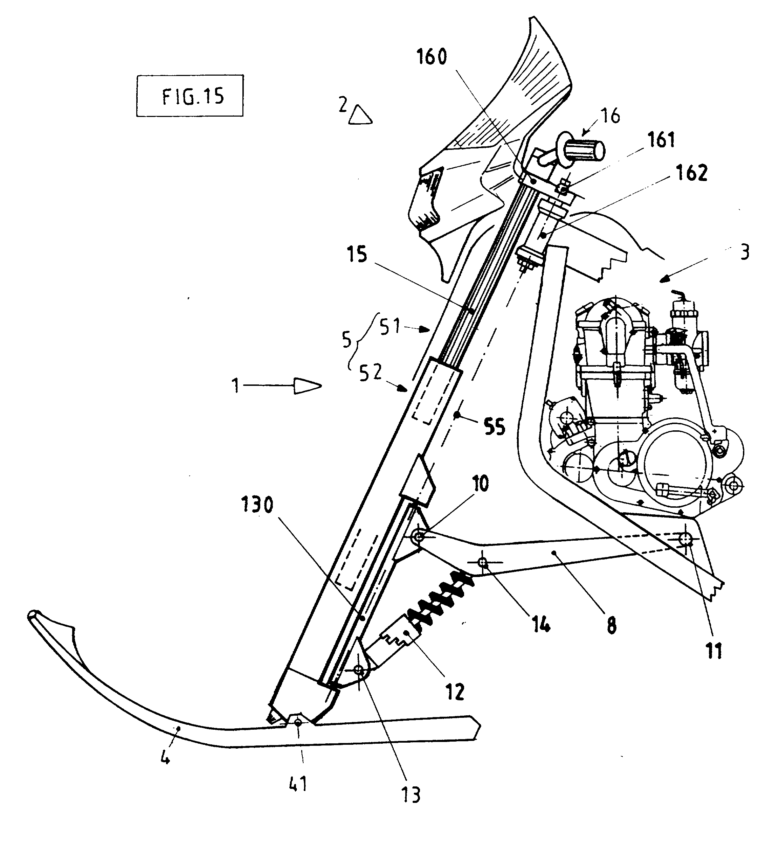

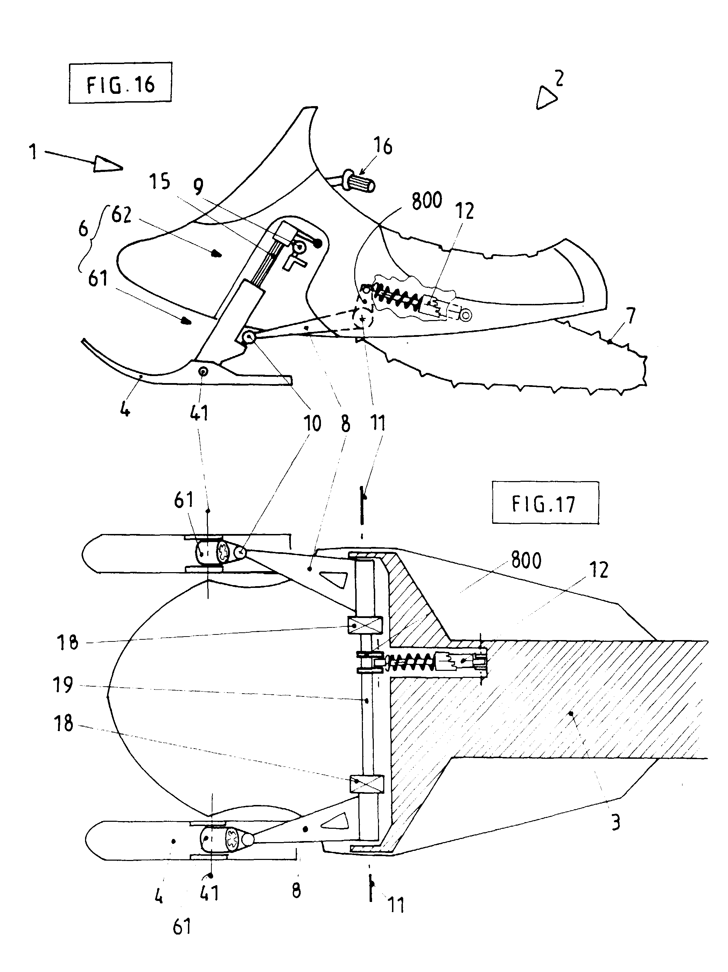

Sur les figures 1§ , 17 , 18, un dispositif de direction et de suspension avant 1 est destiné à être installé sur un véhicule de neige 2 comprenant un ensemble avant de direction 1 articulé à un ensemble arrière porteur 3, lequel est équipé d'au moins une chenille de propulsion 7. L'ensemble avant de direction 1 comporte à son extrémité supérieure un guidon 16, et à son extrémité inférieure un ski 4 articulé en rotation autour d'un axe transversal 41 sur la colonne de direction 5 (figures 9 , 10, 11 ), ou deux skis 4 articulés sur deux colonnes de direction 6 (figures 16, 17, 18).

Le dispositif de direction et de suspension avant 1 comporte une colonne de direction 5 constituée par un élément supérieur 51 monté téléscopiquement sur un élément inférieur 52. L'élément supérieur 51 est relié à l'ensemble arrière porteur 3 par au moins une liaison à pivot 9 dont l'axe de rotation est situé dans le plan P vertical de symétrie du véhicule pour les véhicules comportant un seul ski de direction. L'élément inférieur 52 est disposé dans l'alignement coaxial de l'élément supérieur 51, et est monté coulissant contre l'action d'un système élastique de rappel 12 par rapport audit élément supérieur 51. L'élément inférieur 52 est relié à l'ensemble arrière porteur 3 par un bras de retenue 8 dont l'extrémité avant est rattachée à l'élément inférieur 52 par une liaison articulée 10, tandis que son extrémité arrière est montée pivotante par rapport à l'ensemble porteur arrière 3 autour d'un axe 11 horizontal perpendiculaire au plan ( P ).

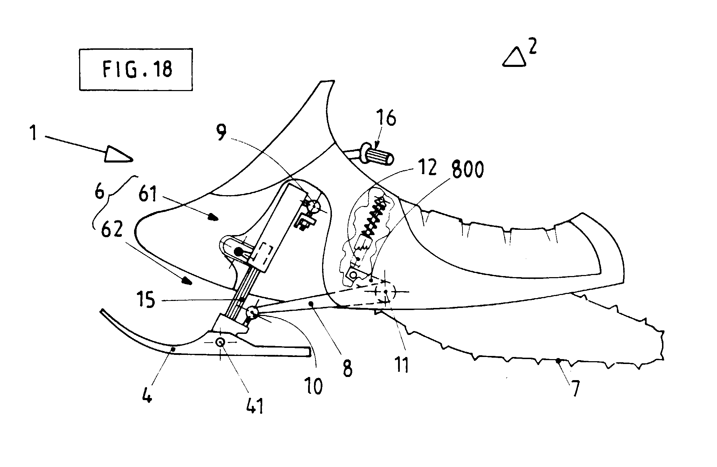

L'élément supérieur 51 assure le guidage axial et l'entraînement en rotation de l'élément inférieur 52 par l'intermédiaire d'un arbre cannelé 15, lequel possède une section polygonale ou toute autre forme de profil coulissant à l'intérieur de l'élément inférieur 52. Dans une variante de réalisation présentée à la figure 18, le montage est inversé étant donné que l'élément supérieur 61 est tubulaire, tandis que l'élément inférieur 62 est constitué d'un arbre pouvant être creux ou plein, et dont les sections droites ont des formes complémentaires autorisant un mouvement relatif de coulissement avec le minimum de jeu longitudinal, et tout en garantissant en permanence leur solidarisation en rotation avec le minimum de jeu angulaire.

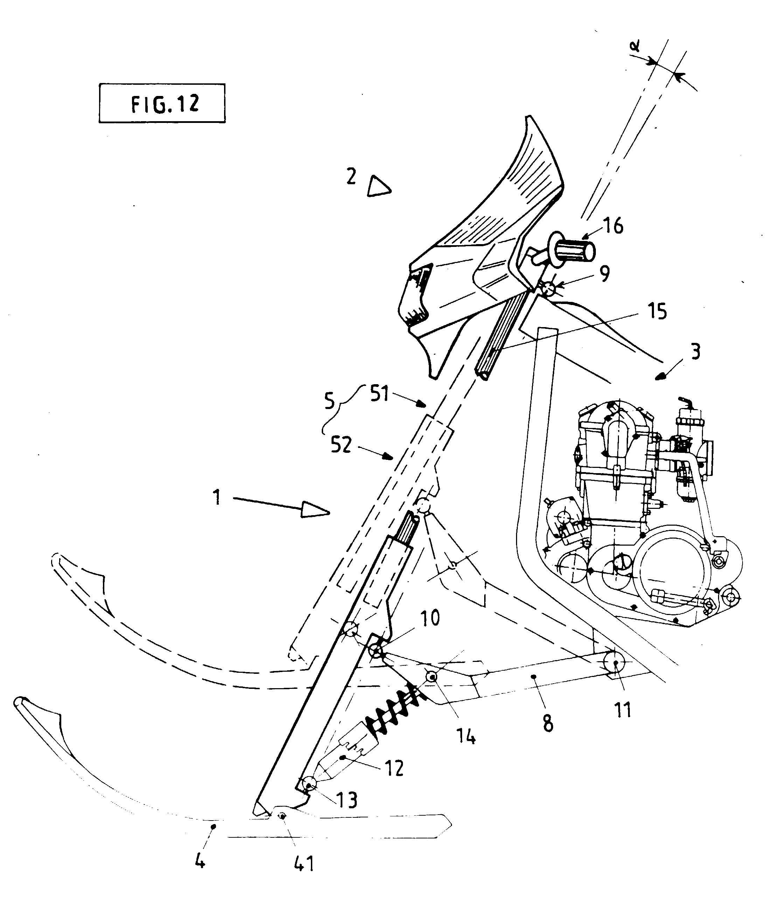

L'élément supérieur 51 peut être relié à l'ensemble porteur arrière 3 par une seule liaison à pivot 9 tel que représenté notamment sur les figures 9 et 12, et dans ce cas, l'arbre coulissant 15 sera solidarisé de façon rigide au guidon 16.

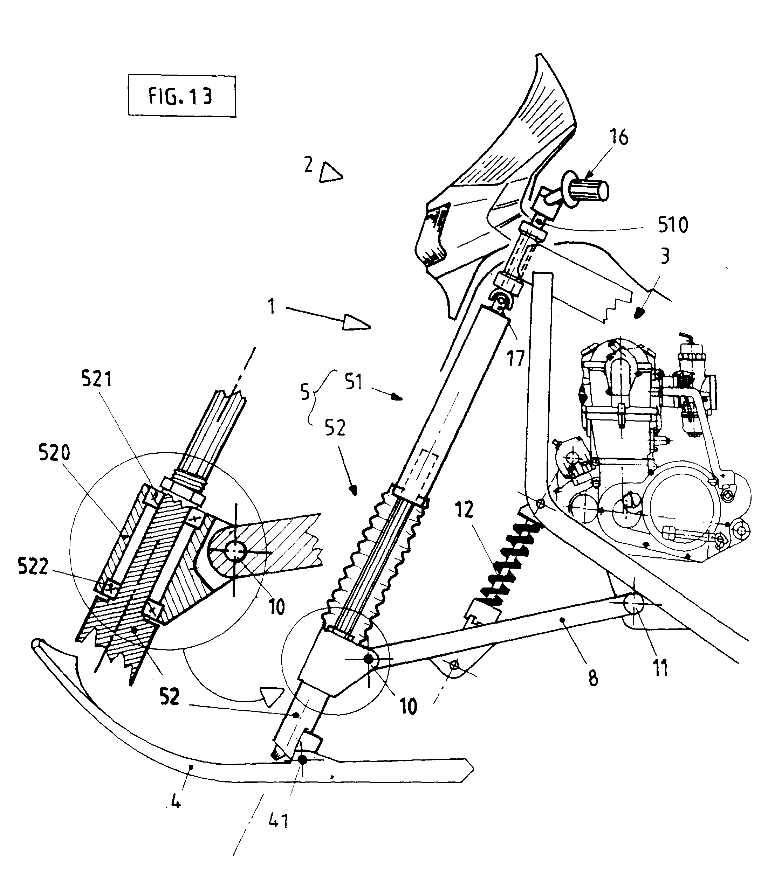

Selon un autre mode de réalisation illustré à la figure 14, l'élément supérieur 51 peut être relié à l'ensemble arrière porteur 3 par une liaison 9 comportant deux rotules 91 et 92 dont les axes neutres de rotation axiale sont alignés et disposés sensiblement parallèlement à l'axe longitudinal de la colonne de direction 5. L'arbre cannelé coulissant 15 est relié au support du guidon 16 par l'intermédiaire d'une liaison rigide en rotation disposant d'un degré de liberté angulaire, par exemple un cardan 17, afin de permettre un débattement angulaire a imposé à l'élément inférieur 52 par le déplacement vers l'avant de l'extrémité avant du bras de retenue 8 lorsque celui- ci se déplace vers le haut suite à la rotation autour de l'axe 11. Ce mode de réalisation est certes un peu plus coûteux que le précédent mais il offre par rapport à celui - ci l'avantage de ne pas transmettre au guidon 16 le débattement angulaire a que subit l'élément inférieur 52. On peut également conserver cet avantage en remplaçant les deux rotules 91 et 92 par tout montage permettant la rotation de l'élément de liaison 510 selon un seul axe fixe , disposé dans le plan vertical de symétrie pour les véhicule comportant un seul ski. On utilise notamment des paliers ou des roulements disposés de façon coaxiale avec l'élément 510 par lequel le guidon 16 entraîne en rotation l'arbre coulissant 15 via le cardan 17 (figure 13 ) .

Sur cette figure 13, le bras de retenue 8 est relié à l'élément inférieur 52 par une articulation 10 permettant une rotation autour d'un axe horizontal perpendiculaire au plan P, et par un manchon 520 disposé coaxialement avec l'élément 52 auquel il est solidarisé par deux roulements 521 et 522 autorisant la libre rotation dudit élément 52 selon un axe contenu dans le plan P .

Sur la figure 13, les deux rotules 91 et 92 peuvent être remplacées par deux roulements rigides 98, 99, ou deux paliers rigides permettant à l'élément de liaison 510 de tourner par rapport à l'ensemble arrière porteur 3 autour d'un seul axe passant par le point central de rotation du cardan 17. L'axe de rotation est disposé dans le plan vertical ( P ) de symétrie du véhicule 2 pour les véhicules à un seul ski.

Selon une variante de réalisation de la figure13, l'élément de liaison 510 peut être tubulaire, de sorte que le cardan 17 est disposé au voisinage de la liaison solidarisant l'élément supérieur 51 à l'ensemble arrière porteur 3. L'arbre cannelé 15 est alors disposé à l'intérieur de l'élément de liaison 510, lequel est solidarisé à l'ensemble arrière porteur 3. Le diamètre intérieur de l'élément de liaison 510 est dimensionné de façon à permettre un léger débattement angulaire de l'arbre cannelé 15 lorsque l'angle de chasse de l'élément inférieur 52 subit des variations angulaires. Une telle disposition inhibe toute transmission des variations de l'angle de chasse au guidon 16 lors du débattement angulaire du bras de retenue 8. La longueur de l'arbre cannelé 15 est ainsi augmentée en remontant le point de rotation au niveau du cardan 17. Il en résulte une diminution des variations angulaires de l'angle de chasse que subit l'élément inférieur 52 .

Sur la figure 14, la liaison 10 entre l'extrémité avant du bras de retenue 8 et l'élément inférieur 52 est constituée par un élément de liaison comportant deux trous 101, 102 disposés perpendiculairement l'un par rapport à l'autre selon les droites H H' et VV' orthogonales permettant le passage de deux axes traversants. Ces axes de liaison pourront être réalisés en une matière plastique ou métallique à faible coefficient de frottement. Des roulements peuvent être utilisés pour réduire au maximum les forces de frottement. Les rotules 9, 91 et 92 reliant l'élément supérieur 51 à l'ensemble arrière porteur 3 pourront également être remplacées par des éléments de liaison du même type .

Sur la figure 15, l'extrémité supérieure de l'arbre coulissant 15 est solidarisé de façon rigide au guidon 16 par l'intermédiaire d'un élément 160 solidarisé à l'ensemble arrière porteur 3 par un pivot 162, lequel est disposé dans le plan vertical de symétrie P et solidarisé à l'ensemble arrière porteur 3 par deux paliers autorisant sa libre rotation selon l'axe 55, et par une douille 161 élastique permettant d'absorber par déformation élastique le débattement angulaire a que subit la colonne de direction 5 suite au débattement angulaire du bras de retenue 8 autour de son axe 11. L'extrémité avant du bras de retenue 8 et l'extrémité inférieure du combiné ressort- amortisseur 12 sont toutes les deux solidarisées à l'élément inférieur 52 par l'intermédiaire d'un élément commun 130 monté pivotant par rapport à l'élément inférieur 52 selon l'axe 55 passant par l'axe du pivot 162. L'extrémité avant du bras de retenue 8 est reliée à l'élément pivotant 130 par un axe 10 disposé perpendiculairement au plan P et l'extrémité inférieure du combiné ressort- amortisseur 12 est relié à l'élément 130 par un axe 13 disposé également perpendiculairement au plan P vertical de symétrie générale du véhicule.

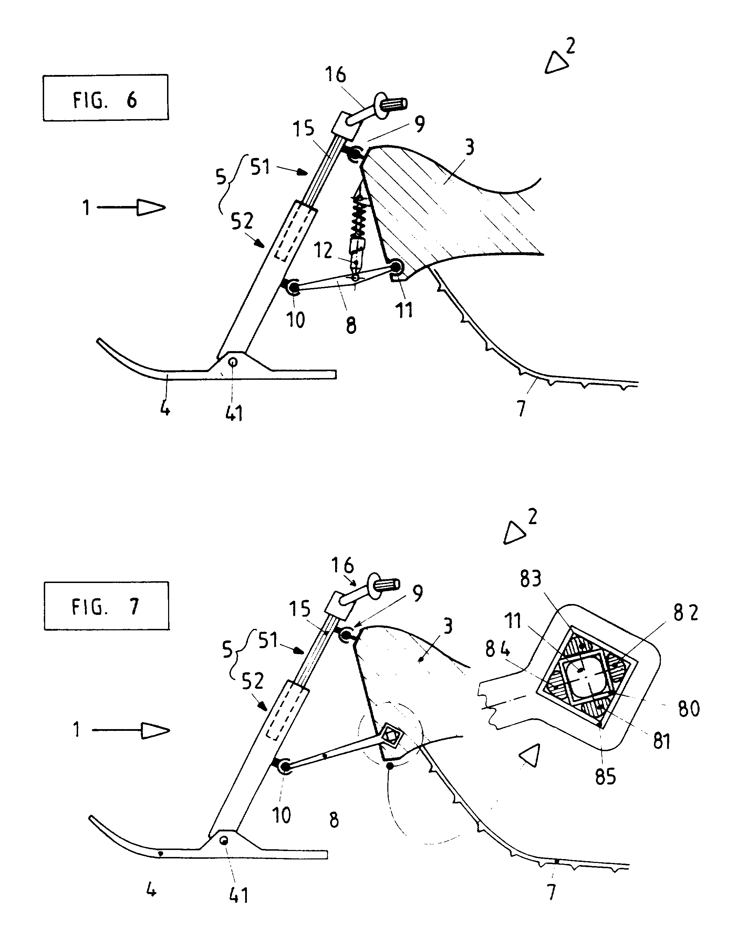

Les moyens de suspension destinés à ramener l'élément inférieur 52 dans sa position la plus éloignée de l'élément supérieur 51 tout en visant à freiner le plus rapidement possible les oscillations de translation peuvent être constituées par des éléments élastiquement déformables, réalisés notamment à l'aide de caoutchoucs organiques ou synthétiques tel que l'élément d'articulation élastique présenté à la figure 7. Cet élément d'articulation élastique comporte une pluralité de blocs de caoutchouc précontraints 81 , 82 , 83 , 84 , disposés entre les quatre faces d'un premier tube carré 80 et les quatre angles d'un deuxième tube carré 85. Le premier tube 80 est solidarisé sans rotation à l'ensemble arrière porteur 3 en étant disposé concentriquement à l'intérieur du deuxième tube 85, lequel est fixé à l'extrémité arrière du bras de retenue 8. Tout mouvement de rotation de l'un des tubes carrés par rapport à l'autre entraîne une compression des blocs de caoutchouc qui se déforment d'une façon progressive au fur et à mesure que la charge croît et que leur force de rappel augmente.

Les moyens de rappel et d'amortissement peuvent également être constitués de combinés ressort - amortisseurs classiques qui peuvent être disposés selon plusieurs configurations .

Sur la figure 1, l'extrémité inférieure du combiné ressort - amortisseur 12 est reliée à la base de la colonne de direction 5, tandis que son extrémité supérieure est reliée au bras de retenue 8 en un point intermédiaire situé entre la liaison 10 reliant son extrémité avant à l'élément inférieur 52, et l'axe 11 autour duquel le bras de retenue 8 pivote par rapport à l'ensemble arrière porteur 3.

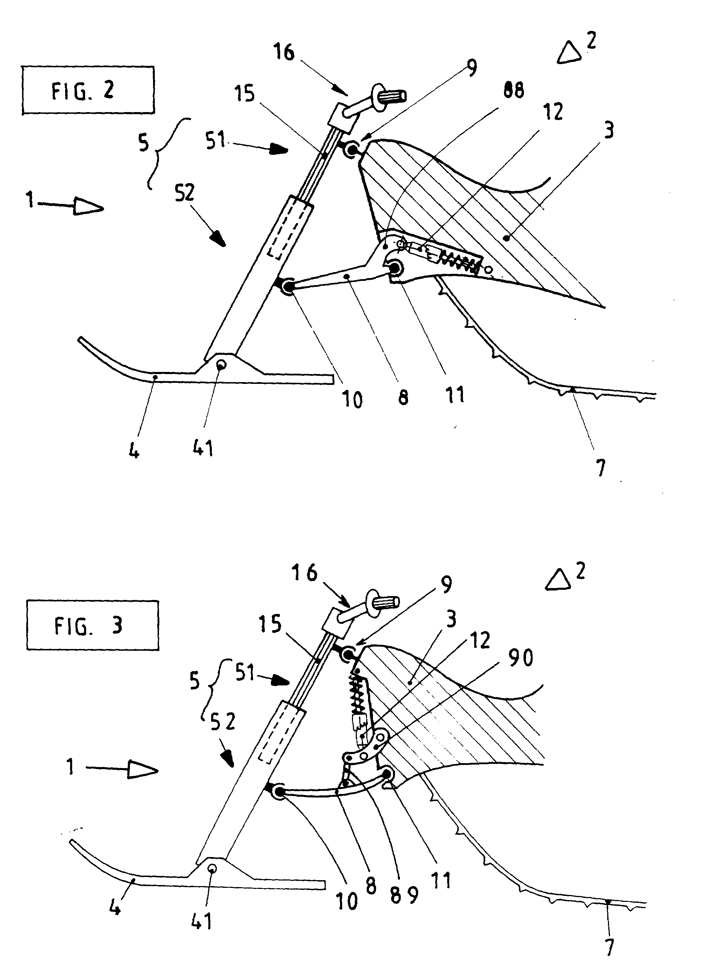

Sur la figure 2, le bras de retenue 8 comporte un bras secondaire 88 relié à l'une des extrémités du combiné ressort - amortisseur 12, dont l'autre extrémité est reliée directement à l'ensemble arrière porteur 3 .

Sur la figure 3, le combiné ressort - amortisseur 12 est rattaché par l'une de ses extrémités à l'ensemble arrière porteur 3, tandis que son autre extrémité est reliée au bras de retenue 8 par l'intermédiaire d'une biellette 90 et d'un bras secondaire 89 monté pivotant par rapport à l'ensemble arrière porteur 3. Un tel montage permet d'optimiser la progressivité de la suspension de l'ensemble avant en calculant les différents bras de leviers et angles d'attaque par lesquels le bras de retenue 8 agit sur le combiné-ressort amortisseur 12.

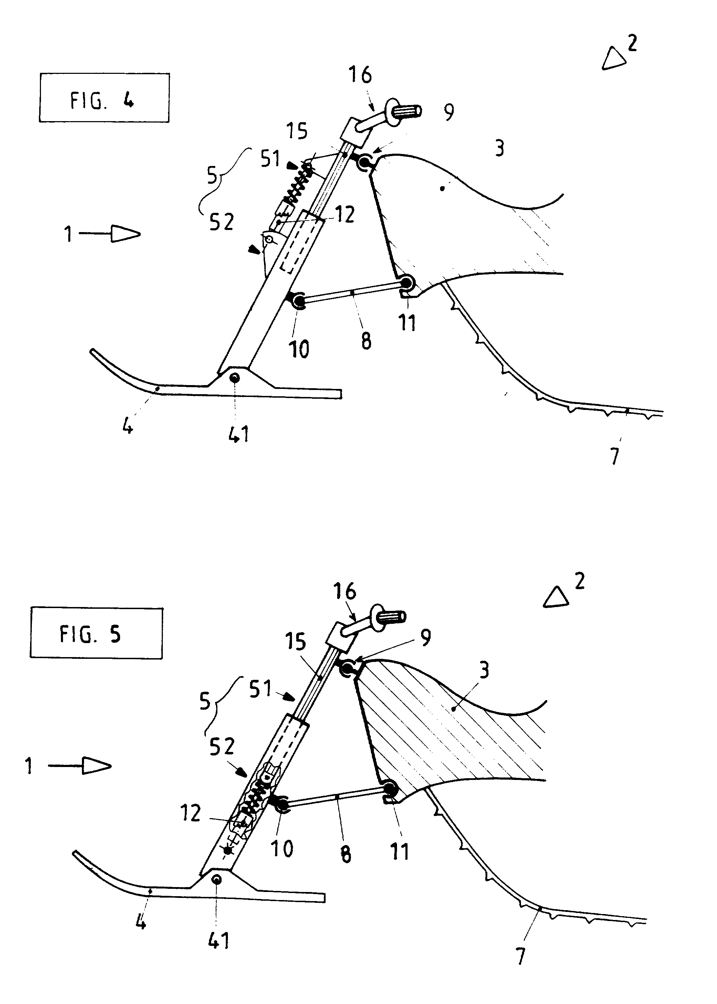

Sur la figure 4, le combiné ressort - amortisseur 12 est disposé sensiblement parallèlement à la colonne de direction 5 et en avant de celle - ci. Il est rattaché par son extrémité inférieure à l'élément inférieur 52, tandis que son extrémité supérieure est fixée à l'élément supérieur 51 .

Sur la figure 5, le combiné ressort - amortisseur 12 est disposé dans la colonne de direction 5; il est rattaché par son extrémité inférieure à l'élément inférieur 52, tandis que son extrémité supérieure est solidarisée à l'élément supérieur 51 .

Sur la figure 6, le combiné ressort - amortisseur 12 est situé au dessus du bras de retenue 8. L'extrémité inférieure est reliée directement au bras 8, tandis que son extrémité supérieure est fixée à l'ensemble arrière porteur 3.

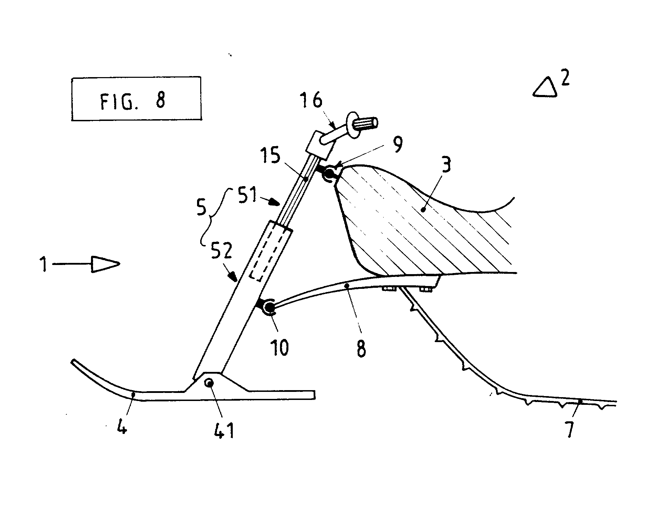

Sur la figure 8, les moyens de rappel et d'amortissement sont constitués par une lame de flexion réalisée en un matériau composite élastiquement déformable, et articulée par son extrémité avant à l'élément inférieur 52. La lame est solidarisée de façon rigide à l'ensemble arrière porteur 3 .

Sur la figure 14, l'extrémité supérieure du combiné ressort - amortisseur 12 est reliée au bras de retenue 8 en un point situé entre la colonne de direction 5 et l'axe 11 de rotation du bras 8 par rapport à l'ensemble arrière porteur 3. L'extrémité inférieure est relié directement au ski 4 en un point situé en arrière de l'axe 41 de pivotement du ski par rapport à la colonne de direction 5. Lorsque le ski 4 n'est plus en contact avec le sol, par exemple durant les sauts, la poussée du combiné ressort - amortisseur 12 entraîne le pivotement vers le haut de la spatule du ski 4. La course de la suspension avant est ainsi augmentée en permettant un pré-amortissement par le talon du ski en réception de saut ou en passage de bosses .

Les figures 16, 17 et 18, montrent un mode de réalisation particulier pour un véhicule de neige 1 comportant deux skis avant 4, les axes de pivotement 11 par rapport à l'ensemble arrière porteur 3 des deux bras de retenue 8 étant disposés coaxialement, et reliés entre eux par un essieu 19 par l'intermédiaire de deux accouplements élastiques 18. L'essieu 19 étant lui - même solidarisé à un maneton 800 coopérant avec le combiné ressort - amortisseur 12 solidarisé à l'ensemble arrière porteur 3. Ainsi tous les petits chocs , transmis par l'un des skis 4 et entraînant un faible débattement angulaire autour de l'axe de rotation 11 du bras de retenue 8 correspondant , sont absorbés par déformation angulaire de l'accouplement élastique sans solliciter le combiné ressort amortisseur 12. Ce dernier n'intervient que pour le rappel et l'amortissement des gros chocs ce qui limite son échauffement et son usure. L'essieu 19 associé aux deux accouplements élastiques 18 se comporte comme une barre de torsion, puisque le déplacement important dans le sens vertical de l'un des deux skis entraîne le débattement angulaire important du bras de retenue 8 correspondant. Il en résulte un mouvement de rotation de l'essieu 19, qui provoque à son tour un débattement angulaire dans le même sens du bras de retenue opposé.

L'essieu 19 et les deux accouplements élastiques 18 peuvent être remplacés par un essieu légèrement élastique en torsion qui remplit lui - même le rôle que remplissaient les accouplements élastiques dans la variante précédente. Un tel essieu peut absorber directement les petits chocs sans solliciter le combiné ressort - amortisseur. Ce dernier sera sollicité lorsque les contraintes mécaniques dépassent un seuil de torsion prédéterminé.

Selon différentes variantes de réalisation, le ou les bras de retenue 8 comporte une seule branche centrale ( figure 11), ou deux branches convergentes vers l'avant (figure 10 ).

L'axe 11 de pivotement du bras de retenue 8 peut être disposé coaxialement avec au moins un axe d'entraînement de la chenille 7de propulsion.

## Revendications

**1.** Véhicule de neige ( 2 ) comprenant :
- un ensemble arrière porteur ( 3 ) équipé au moins d'une chenille de propulsion ( 7 ),
- un ensemble avant de direction et de suspension ( 1) muni au moins d'un ski ( 4 ) , et d'une colonne de direction (5) coopérant avec des moyens d'entraînement en rotation pilotés par un guidon ( 16) de manoeuvre,
caractérisé en ce que :
- l'ensemble avant de direction et de suspension (1) comporte au moins un élément supérieur (51) et un élément inférieur (52) solidarisés en rotation, et montés téléscopiquement à coulissement l'un par rapport à l'autre à l'encontre d'un dispositif élastique de rappel,
- l'élément supérieur (51) et l'élément inférieur (52) sont reliés à l'ensemble arrière porteur (3) respectivement par une liaison à pivot (9), et un bras de retenue (8),
- l'une des extrémités du bras de retenue (8) est articulée à l'ensemble arrière porteur (3) autour d'un axe (11) horizontal s'étendant perpendiculairement au plan (P) de symétrie du véhicule,
- et l'autre extrémité du bras de retenue (8) est rattachée à l'élément inférieur (52) par une liaison mécanique (10) à deux degrés de liberté autorisant un mouvement combiné de rotation autour de deux axes orthogonaux.

**2.** Véhicule de neige motorisé selon la revendication 1, caractérisé en ce que l'élément supérieur (51) comporte un arbre cannelé (15) coulissant coaxialement dans un tube de section profilée complémentaire de l'élément inférieur (52).

**3.** Véhicule de neige motorisé selon la revendication 1, caractérisé en ce que le dispositif de rappel élastique comporte un combiné ressort-amortisseur (12) ayant une extrémité inférieure reliée à la base de la colonne de direction (5), et une extrémité supérieure solidarisée au bras de retenue (8) en un point intermédiaire situé entre la liaison mécanique (10) et le premier axe ( 11 ) horizontal autour duquel le bras de retenue 8 pivote par rapport à l'ensemble arrière porteur (3).

**4.** Véhicule de neige motorisé selon la revendication 1, caractérisé en ce que le dispositif de rappel élastique comporte un combiné ressort - amortisseur (12) ayant une extrémité connectée à l'ensemble arrière porteur (3), et une extrémité opposée solidarisée au bras de retenue (8) soit directement, soit par l'intermédiaire d'un bras secondaire et/ou d'une biellette (88, 89, 90, 800) .

**5.** Véhicule de neige motorisé selon la revendication 1, caractérisé en ce que le dispositif de rappel élastique comporte un combiné ressort - amortisseur (12) ayant une extrémité connectée à l'élément supérieur (51), et une extrémité opposée solidarisée à l'élément inférieur (52).

**6.** Véhicule de neige motorisé selon la revendication 1, caractérisé en ce que le dispositif de rappel élastique comporte un combiné ressort - amortisseur (12) dont l'axe longitudinal est disposé coaxialement avec la colonne de direction (5).

**7.** Véhicule de neige motorisé selon la revendication 1, caractérisé en ce que le guidon (16) de manoeuvre de la colonne de direction (5) est accouplé directement à l'élément supérieur (51).

**8.** Véhicule de neige motorisé selon la revendication 1, caractérisé en ce que le guidon (16) de manoeuvre entraîne en rotation la colonne de direction (5) par l'intermédiaire d'une liaison à cardan (17).

**9.** Véhicule de neige motorisé selon la revendication 1, caractérisé en ce que le dispositif de rappel élastique est constitué par le bras de retenue (8) conformé selon une lame de flexion réalisée en un matériau composite élastiquement déformable, ladite lame ayant une extrémité antérieure articulée à l'élément inférieur (52), et une extrémité postérieure solidarisée de façon rigide à l'ensemble arrière porteur (3).

**11.** Véhicule de neige motorisé selon la revendication 1 caractérisé en ce que l'élément inférieur (52) comporte un arbre cannelé (15) coulissant coaxialement dans un tube de section profilée complémentaire de l'élément supérieur (51).

**12.** Véhicule de neige motorisé selon la revendication 1, caractérisé en ce que le dispositif de rappel élastique comporte un combiné ressort amortisseur (12) ayant une extrémité inférieure reliée au ski (4), et une extrémité supérieure solidarisée au bras de retenue (8) en un point intermédiaire situé entre la liaison mécanique (10) et l'axe (11) horizontal autour duquel le bras de retenue (8) pivote par rapport à l'ensemble arrière porteur (3).

**13.** Véhicule de neige motorisé selon la revendication 1 comportant deux skis (4), caractérisé en ce que les axes de pivotement (11) par rapport à l'ensemble arrière porteur (3) des deux bras de retenue (8) sont disposés coaxialement et sont reliés entre eux par un essieu (19) par l'intermédiaire de deux accouplements élastiques (18), l'essieu (19) étant solidarisé à un maneton (800) coopérant avec le combiné ressort-amortisseur (12) solidarisé à l'ensemble arrière porteur (3).
